# EUROPÄISCHE PATENTANMELDUNG

(11) **EP 4 239 088 A1**
(43) Veröffentlichungstag der Anmeldung: **06.09.2023**
(21) Anmeldenummer: 22159593.7
(22) Anmeldetag: 02.03.2022
(51) Int. Cl.: C22B 7/00, B02C 18/00, C22B 11/00, H01M 8/008

(54) **VERFAHREN ZUR ZERKLEINERUNG VERBRAUCHTER, KATALYSATOR-BESCHICHTETER POLYMERELEKTROLYT-MEMBRANEN**

(71) Anmelder: Heraeus Deutschland GmbH & Co. KG, 63450 Hanau (DE)
(72) Erfinder: Bauer-Siebenlist, Bernhard, 63450 Hanau (DE); Stemmler, Marco, 63450 Hanau (DE); Kraushaar, Christian, 63450 Hanau (DE)
(74) Vertreter: Heraeus IP

(57) **Zusammenfassung**

Verfahren zur Zerkleinerung von verbrauchten, Katalysator-beschichteten PEM-Membranen aus PEM-Brennstoff- und/oder PEM-Elektrolysezellen mittels einer Schneidmühle.

## Beschreibung

Die Erfindung betrifft ein Verfahren zur Zerkleinerung von verbrauchten, Katalysator-beschichteten Polymerelektrolyt-Membranen (in der weiteren Folge mit "PEM-Membran oder auch nur mit "PEM" abgekürzt) aus PEM-Brennstoff- respektive PEM-Elektrolysezellen mittels einer Schneidmühle.

In PEM-Brennstoffzellen und in PEM-Elektrolysezellen sind die jeweiligen Halbzellen mittels einer PEM-Membran, insbesondere mittels einer mit einer elastischen Dichtung ausgestatteten PEM-Membran, voneinander getrennt. Gebräuchlich als eigentliches PEM-Material sind sogenannte lonomere wie insbesondere Copolymere von Tetrafluorethylen und einem Sulfonsäuregruppe-haltigen (Per)fluorvinylether, beispielsweise Nafion^{®} von Chemours. Die PEM-Membran fungiert dabei als Protonentransportmedium und isoliert die Elektroden der PEM-Brennstoff- bzw. PEM-Elektrolysezelle elektrisch voneinander. Vorder- und Rückseite der PEM-Membran weisen dabei typischerweise eine edelmetallhaltige Katalysatorschicht auf. Es ist möglich, dass eine PEM-Membran ferner eine auf die Katalysatorschicht aufgebrachte elektrisch leitfähige, poröse Gasdiffusionsschicht (z.B. in Form eines Kohlenstoffpapiers oder Kohlenstofffasergewebes) umfasst. Bei dem oder den in der Katalysatorschicht enthaltenen katalytisch aktiven Edelmetallen kann es sich beispielsweise um Platin, Rhodium, Palladium, Iridium und/oder Ruthenium, insbesondere um eines oder mehrere der Edelmetalle Platin, Iridium und Ruthenium handeln, wobei das jeweilige Edelmetall als katalytisch aktive Spezies elementar (metallisch) und/oder in chemisch gebundener Form vorliegen kann. Im Allgemeinen umfasst die Katalysatorschicht das oder die Edelmetalle dabei in geträgerter Form, d.h. auf einem Träger, beispielsweise aus einem Kohlenstoffmaterial oder aus einem oxidischen Material. Bezogen auf Katalysator-beschichtete PEM-Membran plus gegebenenfalls vorhandene elastische Dichtung plus gegebenenfalls vorhandene Gasdiffusionsschicht kann der Edelmetallgehalt respektive Gesamtedelmetallgehalt beispielsweise im Bereich von 0,1 bis 10 Gew.-% liegen.

Die verbrauchten, gegebenenfalls mit elastischer Dichtung ausgestatteten, Katalysator-beschichteten PEM-Membranen können eine Fläche beispielsweise im Bereich von 5 bis 5000 cm² aufweisen; die hier beispielhaft genannte, große Flächenbandbreite resultiert daraus, dass die PEM-Membranen Laborgeräten bis hin zu kommerziellen Anlagen entstammen können. Bei Betrachtung individueller Fälle, kann der Gewichtsanteil einer gegebenenfalls vorhandenen elastischen Dichtung beispielsweise im Bereich von 10 bis 50 Gew.-% liegen, bezogen auf die Summe der Gewichtsanteile von elastischer Dichtung und Katalysator-beschichteter PEM-Membran.

Wie gesagt, hierin in Rede stehende Katalysator-beschichtete PEM-Membranen können insbesondere mit einer elastischen Dichtung ausgestattet sein. Eine derartige elastische Dichtung ist mindestens als äußeres Dichtungsprofil oder äußere Randdichtung ausgeführt, welche den Rand bzw. den Umriss der PEM-Membran vollständig umschließt bzw. einfasst. Diese dient dazu, die einzelnen Kammern der Halbzellen wirkungsvoll nach außen abzudichten. Das Material der Dichtung ist elastisch, beispielsweise ein entsprechendes elastisches Material aus oder auf Basis von Gummi, von Kautschuk, von Silikon oder von anderen Elastomerkunststoffen. An sich unnötig zu erwähnen und für den Fachmann klar, dass das elastische Material als solches edelmetallfrei oder zumindest im Wesentlichen edelmetallfrei ist.

Am Ende der Betriebs- oder Nutzungsdauer besagter PEM-Membranen respektive deren edelmetallhaltiger Katalysatorschicht müssen die betreffenden PEM-Brennstoff- oder PEM-Elektrolysezellen respektive darin verbaute PEM-Membranen ersetzt werden. Aufgrund des oder der in der oder den Katalysatorschichten der PEM-Membranen enthaltenen wertvollen Edelmetalle werden verbrauchte PEM-Membranen nicht einfach entsorgt, sondern einem Edelmetallrecycling zugeführt. Im Zuge dessen besteht die Notwendigkeit, solche PEM-Membranen bzw. ein Konvolut verschiedener solcher PEM-Membranen zu zerkleinern und zu homogenisieren, einerseits als Vorbereitung für das eigentliche Edelmetallrecycling, andererseits mit dem Ziel ein Material zu gewinnen, welches eine repräsentative Beprobung und Bestimmung des Edelmetallgehaltes anhand einer solchen repräsentativen Probe erlaubt.

Bei der Suche nach einem die vorerwähnte Aufgabenstellung lösenden Verfahren hat sich herausgestellt, dass sich die Zerkleinerung gut mit einer Schneidmühle durchführen lässt. Die vorliegende Erfindung besteht daher in einem Verfahren zur Zerkleinerung von verbrauchten, Katalysator-beschichteten PEM-Membranen aus PEM-Brennstoff- und/oder PEM-Elektrolysezellen, dadurch gekennzeichnet, dass die Zerkleinerung mittels einer Schneidmühle erfolgt. Die verbrauchten, Katalysator-beschichteten PEM-Membranen und insbesondere verbrauchte, mit elastischer Dichtung ausgestattete, Katalysator-beschichtete PEM-Membranen stellen mithin mittels Schneidmühle zu zerkleinerndes Mahlgut dar.

Bezüglich Katalysator-beschichteter PEM-Membranen respektive mit elastischer Dichtung ausgestatteter, Katalysator-beschichteter PEM-Membranen sei auf das Vorerwähnte verwiesen.

Es kann sich dabei um gleiche oder verschiedene Katalysator-beschichtete PEM-Membranen respektive um gleiche oder verschiedene, mit elastischer Dichtung ausgestattete, Katalysator-beschichtete PEM-Membranen handeln. Verschiedene Katalysator-beschichtete PEM-Membranen - mit oder ohne elastische Dichtung - können beispielsweise unterschiedlichen Quellen entstammen und beispielsweise bei einem Wertstoffsammler unsortiert als Konvolut anfallen und so zu einem Betreiber des erfindungsgemäßen Verfahrens gelangen. In einem solchen Fall können sich die verschiedenen PEM-Membranen beispielsweise hinsichtlich Fabrikat, Form, Größe, Edelmetallart(en) und -gehalt in der Katalysatorschicht, Art des Membranmaterials, Vorhandensein einer elastischen Dichtung und/oder Art einer elastischen Dichtung unterscheiden.

Das erfindungsgemäße Verfahren kann batchweise (diskontinuierlich) oder kontinuierlich durchgeführt werden.

Es ist zweckmäßig, das erfindungsgemäße Verfahren mit trockenem bzw. getrocknetem zu zerkleinerndem Mahlgut zu betreiben.

Wenn auch nicht bevorzugt, so kann das erfindungsgemäße Verfahren unter Kühlung des zu zerkleinernden Mahlguts durchgeführt werden, beispielsweise durch Zugabe von Trockeneis oder von Flüssigstickstoff zum Mahlgut vor oder während dessen Zerkleinerung.

Die Zerkleinerung an sich erfolgt erfindungsgemäß in einer üblichen dem Fachmann an sich bekannten Schneidmühle. Solche Schneidmühlen werden beispielsweise von der Retsch GmbH, Haan oder von der Firma Fritsch GmbH, Idar-Oberstein hergestellt und vertrieben.

Der Zerkleinerungsvorgang kann so lange durchgeführt werden, bis ein gewünschtes Zerkleinerungsergebnis erzielt ist, beispielsweise in Form einer angestrebten maximalen Partikelgröße des Mahlguts, beispielsweise im Bereich von 1 bis 10 mm in Richtung der größten Längenausdehnung der bei der Zerkleinerung gebildeten Partikel. Wie dem Vorerwähnten zu entnehmen ist, kann das zerkleinerte Mahlgut ein Gemenge aus zerkleinerter Katalysator-beschichteter PEM-Membran und zerkleinerter elastischer Dichtung sein. Eine maximale Partikelgröße des Mahlguts kann abhängig von der verwendeten Schneidmühle (Modell und darin zum Einsatz gelangendes Werkzeug) über die Parameter (i) Energieeintrag während des Zerkleinerungsvorgangs und/oder (ii) Dauer des Zerkleinerungsvorgangs eingestellt werden.

Bei batchweiser Durchführung des erfindungsgemäßen Verfahrens, insbesondere jedoch bei Durchführung des erfindungsgemäßen Verfahrens mit einem Konvolut von verbrauchten, gegebenenfalls elastische Dichtungen aufweisenden, Katalysator-beschichteten PEM-Membranen kann es zweckmäßig sein, das zerkleinerte Mahlgut zwecks weiterer Homogenisierung vor einer weiteren Prozessierung oder Verwendung zu durchmischen.

Dem zerkleinerten und gegebenenfalls im Anschluss daran zusätzlich gemischten Mahlgut können eine oder mehrere Proben entnommen werden zwecks Bestimmung des durchschnittlichen Edelmetallgehalts. Das zerkleinerte Mahlgut kann im Übrigen einem üblichen Edelmetallrecyclingprozess unterworfen werden, welcher im Allgemeinen mehrere Teilprozesse umfassen kann. Insofern kann das erfindungsgemäße Verfahren einen oder mehrere dahingehende im Anschluss an die Zerkleinerung stattfindende Verfahrensschritte aufweisen; beispielsweise indem das erfindungsgemäße Verfahren nach Abschluss der Zerkleinerung mindestens einen Recycling- oder Aufarbeitungsschritt umfasst, welcher ausgewählt ist aus den Schritten Veraschung (Abbrand) und hydrometallurgische Aufarbeitung.

Im Falle zu zerkleinernden Mahlgutes in Form verbrauchter, mit elastischer Dichtung ausgestatteter, Katalysator-beschichteter PEM-Membranen kann in einer bevorzugten Ausführungsform des erfindungsgemäßen Verfahrens in vorteilhafter Weise Gebrauch gemacht werden von einem unterschiedlichen Zerkleinerungsverhalten bzw. einer unterschiedlichen Zerkleinerungsfähigkeit oder Mahlbarkeit der beiden verschiedenen Materialanteile des Mahlguts, genauer gesagt dessen Anteils elastischer Dichtung und dessen Anteils Katalysator-beschichteter PEM-Membran. So konnte im Rahmen der Entwicklung des erfindungsgemäßen Verfahrens festgestellt werden, dass sich der aus Katalysator-beschichteter PEM-Membran gebildete Anteil schneller bzw. leichter zerkleinern lassen kann als der aus elastischer Dichtung gebildete Anteil. Die Zerkleinerung wird dabei so bzw. nur solange (nicht länger andauernd) durchgeführt, bis ein gewünschtes Zerkleinerungsergebnis hinsichtlich des Anteils Katalysator-beschichteter PEM-Membran am zerkleinerten Mahlgut erzielt ist, beispielsweise in Form einer angestrebten maximalen Partikelgröße des Anteils Katalysator-beschichteter PEM-Membran am zerkleinerten Mahlgut, während die Partikelgröße des Anteils elastischer Dichtung gröber und damit oberhalb der maximalen Partikelgröße des Anteils Katalysator-beschichteter PEM-Membran liegt. Eine gewünschte maximale Partikelgröße des Anteils Katalysator-beschichteter PEM-Membran am zerkleinerten Mahlgut kann beispielsweise im Bereich weniger Millimeter, beispielsweise im Bereich von 1 bis 5 mm in Richtung der größten Längenausdehnung der betreffenden Partikel liegen.

Nach Beendigung des gemäß der bevorzugten Ausführungsform des erfindungsgemäßen Verfahrens durchgeführten Zerkleinerungsvorgangs kann ein respektive der gröberkörnige Anteil zerkleinerter elastischer Dichtung von einem respektive dem feinerkörnigen Anteil Katalysator-beschichteter PEM-Membran abgetrennt werden, beispielsweise mittels Siebung.

Dieser feinerkörnige Anteil kann dann in Analogie zum Vorerwähnten beprobt, hinsichtlich Edelmetallart und -anteil analysiert und/oder einem Edelmetallrecycling unterworfen werden.

Vorerwähntes im Anschluss an den Zerkleinerungsvorgang stattfindendes Abtrennen oder Sieben kann mittels einer separaten Siebvorrichtung erfolgen; in einer zweckmäßigen und vorteilhaften Ausgestaltung kann es mittels einer in die Schneidmühle integrierten Siebvorrichtung praktisch während des Zerkleinerungsvorgangs erfolgen. Beispiele für solche Siebvorrichtungen umfassen Bodensiebe, beispielsweise solche mit runden Lochungen im Durchmesserbereich von 1 bis 5 mm oder mit quadratischen Lochungen von 1mm × 1mm bis 5mm × 5mm. Mit anderen Worten, das erfindungsgemäße Zerkleinerungsverfahren kann hier im Falle seiner bevorzugten Ausführungsform zugleich sortentrennend im Sinne eines parallel erfolgenden Mahlungs- und Siebungs-Vorgangs verwirklicht werden.

Die bevorzugte Ausführungsform des erfindungsgemäßen Verfahrens erlaubt es, vorerwähnte Beprobung, vorerwähnte Edelmetallanalytik und/oder vorerwähntes Edelmetallrecycling im Wesentlichen alleine an bzw. im Wesentlichen alleine mit dem feinerkörnigen edelmetallhaltigen Anteil des zerkleinerten Mahlgutes durchführen zu können. Der davon getrennt gewonnene gröberkörnige Anteil an zerkleinerter elastischer Dichtung kann anderweitig verwendet werden, beispielsweise als Zusatzstoff in Boden- oder Straßenbelägen.

### Ausführungsbeispiel:

93,88 g verbrauchte, mit Randdichtungen aus Silikonelastomer ausgestattete, Katalysator-beschichtete Polymerelektrolyt-Membranen aus PEM-Brennstoffzellen wurden in einer mit einem Bodensieb mit quadratischen Lochungen von 3mm × 3mm ausgestatteten Schneidmühle (Modell SM 300 der Firma Retsch GmbH, Retsch-Allee 1-5, 42781 Haan,
Deutschland) im jeweils 30 Sekunden andauernden Chargenbetrieb zerkleinert. Dabei wurden 76,33 g feinkörnige Fraktion und 17,55 g grobkörnige Über-Sieb-Fraktion erhalten. Beide Fraktionen wurden nach Veraschen und nasschemischer Bearbeitung des Ascherückstands mittels ICP-OES auf ihren Edelmetallgehalt untersucht. Nachfolgende Tabelle zeigt die erhaltenen Ergebnisse für die beiden Fraktionen:

| | Feinkornfraktion | Über-Sieb-Fraktion |
|---|---|---|
| Gewicht | 76,33 g | 17,55 g |
| Partikelgröße | >0 bis 3 mm | >3 bis 6 mm |
| Platingehalt | 2,62 Gew.-% | 0,12 Gew.-% |
| Rutheniumgehalt | 0,22 Gew.-% | <0,01 Gew.-% |

## Patentansprüche

1. Verfahren zur Zerkleinerung von verbrauchten, Katalysator-beschichteten PEM-Membranen aus PEM-Brennstoff- und/oder PEM-Elektrolysezellen, **dadurch gekennzeichnet, dass** die Zerkleinerung mittels einer Schneidmühle erfolgt.

2. Verfahren nach Anspruch 1, wobei die verbrauchten, Katalysator-beschichteten PEM-Membranen mit elastischen Dichtungen ausgestattet sind.

3. Verfahren nach Anspruch 1 oder 2, wobei es sich um gleiche oder verschiedene Katalysator-beschichtete PEM-Membranen handelt.

4. Verfahren nach einem der vorhergehenden Ansprüche, wobei das Verfahren batchweise oder kontinuierlich durchgeführt wird.

5. Verfahren nach einem der vorhergehenden Ansprüche, wobei der Zerkleinerungsvorgang so lange durchgeführt wird, bis ein gewünschtes Zerkleinerungsergebnis erzielt ist.

6. Verfahren nach einem der Ansprüche 2 bis 5, wobei die Zerkleinerung nur solange durchgeführt wird, bis ein gewünschtes Zerkleinerungsergebnis hinsichtlich des Anteils Katalysator-beschichteter PEM-Membran am zerkleinerten Mahlgut erzielt ist.

7. Verfahren nach einem der Ansprüche 2 bis 6, wobei nach Beendigung des Zerkleinerungsvorgangs gröberkörniger Anteil zerkleinerter elastischer Dichtung von feinerkörnigem Anteil Katalysator-beschichteter PEM-Membran abgetrennt wird.

8. Verfahren nach Anspruch 7, wobei das Abtrennen mittels Siebung erfolgt.

9. Verfahren nach Anspruch 7 oder 8, wobei der abgetrennte feinerkörnige Anteil beprobt, hinsichtlich Edelmetallart und -anteil analysiert und/oder einem Edelmetallrecycling unterworfen wird.

10. Verfahren nach einem der Ansprüche 7 bis 9, wobei das Abtrennen oder Sieben mittels einer in die Schneidmühle integrierten Siebvorrichtung während des Zerkleinerungsvorgangs erfolgt.
